# EUROPEAN PATENT APPLICATION

(11) **EP 4 524 332 A1**
(43) Date of publication of application: **19.03.2025**
(21) Application number: 24199952.3
(22) Date of filing: 12.09.2024
(51) Int. Cl.: E02F 9/26, B60R 1/00

(54) **WORK VEHICLE INCLUDING A WORK AREA VISUALIZATION SYSTEM**

(30) Priority: 13.09.2023 IT 202300018864
(71) Applicant: CNH Industrial Italia S.p.A., 10156 Torino (IT)
(72) Inventor: Gravili, Andrea, 10156 Turin (IT); Girardi, Mario, 10156 Turin (IT); Nigro, Domenico, 10156 Turin (IT); Venezia, Antonio, 10156 Turin (IT); Liberti, Stefano, 10156 Turin (IT); Greco, Piero, 10156 Turin (IT)
(74) Representative: CNH Industrial IP Department

(57) **Abstract**

Work vehicle (WL) comprising an articulated arm (AB) operatively hinged to a front portion (F1) of a vehicle chassis (F) and comprising a processing unit (CPU), a first camera (C1) and a second camera (C2) connected to said front portion of the vehicle chassis to frame a work area in front of the vehicle according to different angles and generate respective video streams, a display (D) arranged in a vehicle cabin (C), in which the unit processing is configured, when a visual support function is active, to select the video stream between said first and second cameras based on a current kinematic configuration of the articulated arm.

## Description

### Field of the invention

The present invention relates to the field of visibility improving in the context of compact wheel loader vehicles equipped with a lifting arm for loading, unloading, selecting, pushing, raking, transporting bulk material of various kinds, or for digging and moving soil.

### State of the art

Visibility is considered a fundamental parameter in many human activities, especially in the field of transport and movement of goods and materials and the lack of visibility can cause even serious damage to things and people during work operations.

Work vehicles equipped with a lifting arm at the end of which a bucket or a fork can be rotably fixed have the drawback of poor visibility in some positions of the arm or when a large pallet is moved with the fork. For convenience, a working arm including a bucket or fork is hereinafter referred to as an "articulated arm".

In fact, a human operator, when inside the control cabin of the work vehicle, may have difficulty visualizing the material to be moved as well as he may not be in a position to visualize an obstacle along a movement path.

The configuration of the cockpit can also contribute to poor visibility, and in particular, the ducts of the air conditioning system installed in the lower part, near the steering column.

Therefore, it is difficult to create a cabin that has a windshield that extends downwards towards the bottom of the cabin itself.

Unless specifically excluded in the detailed description that follows, what is described in this chapter is to be considered as an integral part of the detailed description.

### Summary of the invention

The aim of the present invention is to limit the unwanted effects due to the poor operational visibility that a human operator could have when he is inside a control cabin of a work vehicle equipped with an articulated arm.

The basic idea of the present invention is therefore to implement a work vehicle, comprising an articulated arm, two cameras arranged approximately in the front part of the vehicle to frame the work area, of which the first is positioned in a lower part of the vehicle and the other is arranged in an upper part of the vehicle and at least one display arranged in the vehicle control cabin operationally connected to the two cameras and wherein a processing unit is configured to switch the display of the video stream generated by the one or by the other camera depending on the position of the articulated arm.

According to a preferred variant of the invention, the first camera is associated with the vehicle chassis in a lower end portion, while the second camera is associated with the chassis approximately at a hinge point of the articulated arm or more preferably, the second camera is associated with the roof of the vehicle cabin or alternatively is associated with a vehicle front light.

According to a preferred variant of the invention, the vehicle is of the wheeled type comprising a pair of front wheels, and wherein the first camera is arranged between the wheels, while the hinge point of the articulated arm is arranged above the articulated arm.

The two cameras have different orientations, in particular, the first camera has a sighting direction approximately parallel with the ground and approximately coaxial with a longitudinal development axis of the vehicle.

The second camera, being in an elevated position compared to the first camera, heads downwards.

Furthermore, when it is arranged laterally with respect to the hinge area of the articulated arm, which generally lies in a vertical plane passing through said axis of longitudinal development, therefore the sighting direction of the second camera is oblique in the sense that it is incident both with said vertical plane and with a horizontal plane containing the sighting direction of the first camera. When the second camera is associated with the roof of the cabin, it can be positioned centrally, i.e. approximately parallel with the development axis of the vehicle.

Thanks to the present invention, it is possible to compensate for the lack of visibility of the human operator during the different positions that the articulated arm can assume.

According to a first variant of the invention, the processing unit estimates the position of the bucket or fork with the relative load and activates the first or second camera accordingly. This estimate, for example, is made on the basis of the angles between the components that define the articulated arm and with the vehicle chassis or on the basis of the relaxation of the hydraulic actuators served by the articulated arm, the kinematics of the arm itself being known.

According to a preferred variant of the invention, the processing unit is configured to carry out an analysis of the video streams and to estimate the occupation of the view of each camera by the articulated arm and by its load, automatically selecting the camera that currently has the least view occupied by the articulated arm and by its load. For this purpose, simple object or reflection point recognition techniques can be implemented or neural networks can be implemented.

The dependent claims describe preferred variants of the invention, forming an integral part of the present description.

### Brief description of the drawings

Further objects and advantages of the present invention will be clear from the following detailed description of an example of its implementation (and its variants) and from the attached drawings given purely for explanatory and non-limiting purposes, in which:
Fig. 1 shows an electrical diagram of a control system for the on-board cameras of the work vehicle covered by the present invention;
Fig. 2 shows, from a side view, a work vehicle in an operational configuration;
   in Figs. 3 and 5 enlarged details of figure 2 are shown, while
Fig. 4 shows a perspective view of any of the two cameras with which the vehicle in Fig. 2 is equipped;
Fig. 6 shows, in perspective view, a preferred variant of the invention in which one of the two cameras is associated with a vehicle light.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description of the invention

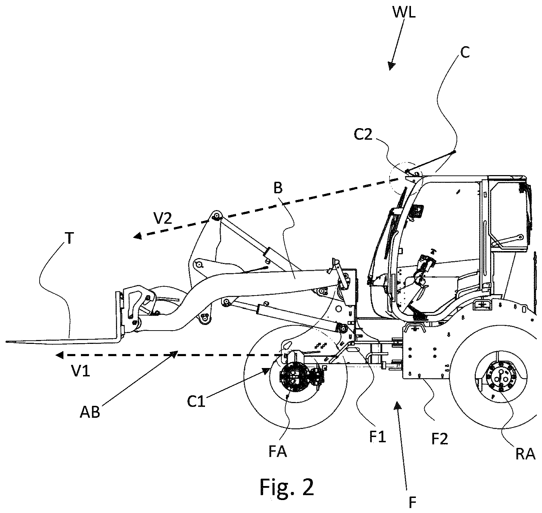

The present invention proposes to implement a work vehicle WL, in particular a wheeled vehicle and more in particular a compact wheeled vehicle, as shown in Fig. 2. It includes a frame F, for example of the articulated type with a front portion F1 and a rear portion F2 interconnected by a hinge. An articulated arm AB is rotatably connected to the front portion F1 of the frame. This includes for example an arm B, of elongated shape, directly hinged to the frame F and a tool T such as a bucket or a fork hinged to the arm B, in a known way.

Evidently, corresponding hydraulic actuators allow the arm to raise and lower with respect to the supporting surface of the vehicle and the tool to be able to rotate with respect to the arm. The kinematics of the articulated arm AB can be any.

According to the present invention, a first camera C1 is associated with the front portion F1 of the vehicle chassis F, in a lower position, while a second camera C2 is associated with the front portion F1 or rear F2 of the vehicle chassis F, in a higher position.

The terms higher and lower are mutually relative terms here, in the sense that the first camera is located below the second camera. In particular, the first camera is preferably positioned in a lower part of the chassis, when the vehicle is in operating conditions and oriented with a sighting direction V1 approximately parallel to the support surface, as shown in figure 2 with the straight line V1.

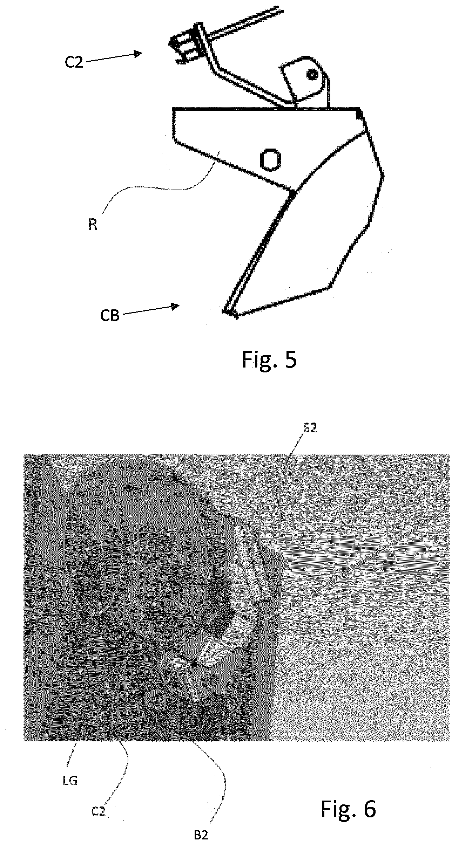

The second camera C2 is associated with the frame in a relatively high area and is oriented according to the sighting direction V2 to point downwards according to the straight line V2. Preferably, it is associated with a vehicle light L, see Fig. 6, which is lateral and therefore it is slightly rotated to compensate for the lateral positioning.

More preferably, it is associated with the roof R of the vehicular CB cabin as shown in Fig. 2.

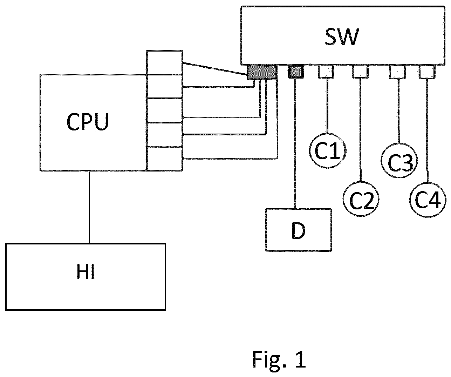

Fig. 1 shows a CPU processing unit operationally connected with two or more cameras C1 - C4 and with a video stream switch SW.

The processing unit is configured to manage the video stream to be sent to the display D operationally connected to the switch and located in the vehicle cabin C.

According to the present invention, the CPU processing unit is configured to control the switch so as to send the video stream generated by the first or second camera to the display depending on the position of the articulated arm AB. The activation of the display via the two cameras is achieved through a human/machine interface device HI, for example a physical button or a tactile display.

Preferably, the activation of the display is conditional on the activation of the hydraulic functions. Work vehicles are generally equipped with a button or interface that allows the activation and deactivation of the components operated by the hydraulic circuit. Thus according to a preferred variant of the invention, the activation of the display with automatic switching between the two cameras is conditioned on the activation of the hydraulic functions.

Preferably, when the display with automatic switching is activated, a button on the joystick allows to force switching to the other camera. For example, if the processing unit selects the second camera C2 as the video source to send to the display, the operator can switch to the first camera C1 with a simple press of said button. Preferably, the switching is carried out in such a way that, by lifting the tool T from a position close to the support surface, the second camera C2 is initially selected and, subsequently, the first camera C1.

This advantageously allows to always keep a check on the work area.

Preferably, when the tool T exceeds a predetermined height, then the second camera is selected again. Advantageously, in this way, the vision of the second camera complements the vision of the operator, even if the tool does not directly interfere with the vision of the work area.

With reference to Fig. 1, it is noted that the vehicle can be equipped with different cameras C1 - C4, for example arranged on the roof of the cab or in the rear area of the vehicle.

Work vehicles are often equipped with functions that facilitate operations, including:
- The shaking function, see for example US2018135274, useful for freeing attached material or for spreading gravel;
- The tool hooking function, generally achieved using a special actuator.

Preferably, the work area visualization function with automatic switching between cameras is automatically activated when one of said shaking and/or tool hooking functions is activated.

In particular, when the tool hooking function is activated, the display of the video stream of the first camera C1 is activated.

According to a preferred variant of the invention, the activation of the work area display with automatic switching between cameras can be customized by automatically activating in relation to a specific function.

For example, it is known a ground leveling procedure in which the vehicle moves backwards with the bucket pressed against the supporting surface: the bucket assumes a specific position. For example, the operator can associate the activation of the visualization of the work area when the articulated arm assumes specific and predetermined configurations, such as the leveling procedure.

The position of the forward/reverse gear selector can also be taken into account to determine whether the display function is activated.

Preferably, when reverse gear is selected and the arm is raised, a video stream generated by a C3 or C4 rear camera is reproduced by the display, so as to allow the operator to monitor any obstacles behind the vehicle.

Preferably, the function can be automatically deactivated when the joystick with which the articulated arm is controlled is released for a time interval that exceeds a predetermined settable threshold.

The work area visualization functionality can preferably be automatically deactivated when the vehicle proceeds at a speed that exceeds a predetermined threshold.

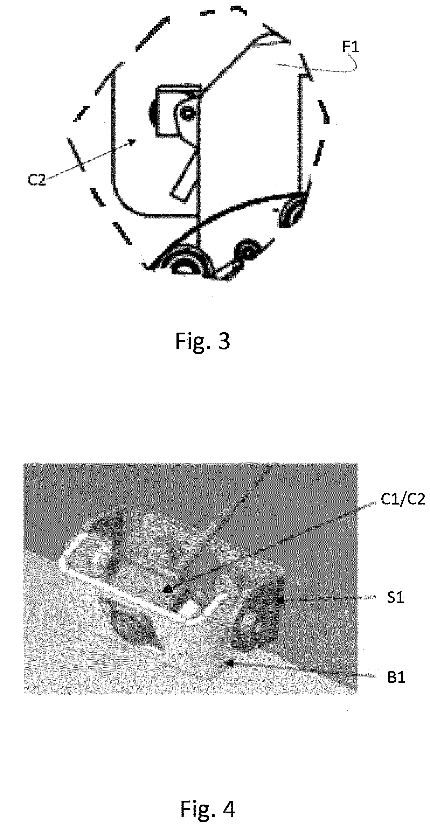

With reference to figures 3 - 5, the first camera C1 is associated with the front portion F1 of the vehicle frame F. It is preferably fixed by means of a bracket B1 hinged to the frame or to a counter-bracket S1. This configuration allows the operator to modify the inclination of the sighting direction V1 with respect to the vehicle support surface within a predetermined margin.

The second camera C2, according to the variant of Fig. 6, is fixed to an front light LG of the vehicle, by means of a bracket B2 hinged on a counter-bracket S2 curved to be fixed itself to the fixing point of the front light LG, following the shape exterior of the front light LG.

The second camera C2, according to the variant of Fig. 2, is fixed to the roof R of the cab CB of the vehicle, using a fixing system similar or identical to that of the first camera C1.

Also in the case of second camera C2, it is hinged to bracket B2 in order to allow the operator to vary the sighting direction V2.

According to a preferred aspect of the present invention, the switching between the two cameras is carried out on a kinematic basis, i.e. on the basis of the position of the articulated arm and more particularly of the tool in the work area. According to a special menu, the operator can select the configuration of the arm, which determines the switching between the two cameras.

According to a further preferred variant of the invention, the video streams are analyzed by the processing unit, so as to select the video stream in which the articulated arm appears least. Conversely, the processing unit can select the video stream in which the tool appears most.

For example, when transporting a load it is more advantageous to observe any obstacles on the ground than the transported load. Conversely, during loading operations, in particular, when the vehicle is stationary or close to zero speed and the arm is operated for example to fork up a pallet, then it is more advantageous to have the video stream on display D that best captures the tool. Constructive variations to the non-limiting example described are possible, without departing from the scope of protection of the present invention, including all the equivalent embodiments for a person skilled in the art, to the content of the claims.

From the above description, the person skilled in the art is able to realize the object of the invention without introducing further construction details.

## Claims

1. Work vehicle (WL) comprising an articulated arm (AB) operatively hinged to a front portion (F1) of a vehicle chassis (F) and comprising
- a processing unit (CPU),
- a first camera (c1) and a second camera (C2) connected to said front portion of the vehicle chassis to frame a work area in front of the vehicle according to different angles and generate respective video streams,
- a display (D) located in a vehicle cabin (C),
wherein the processing unit is configured, when a display support function is active, to select the video stream between said first and second cameras according to a current kinematic configuration of the articulated arm.

2. The vehicle according to claim 1, wherein said processing unit is configured to deactivate said visual support function when at least one of the following conditions occurs:
- a control lever of the articulated arm is released for a time interval that exceeds a predetermined time threshold;
- the vehicle moves forward at a speed that exceeds a predetermined speed threshold;
- when the video stream between said first and second cameras is manually selected using a specific button.

3. Vehicle according to any one of the preceding claims, wherein said processing unit is configured to automatically activate said visual support function when the articulated arm assumes a predetermined configuration.

4. Vehicle according to claim 4, wherein said automatic activation is also subordinated to a forward or reverse gear setting or to an activation of hydraulic functions.

5. Vehicle according to any of the previous claims 1 - 4, wherein the first camera is arranged at a height, with respect to a support surface of the vehicle, lower than said second camera and front light said processing unit is configured for select the video stream generated by said first camera when a current height of the arm with respect to said support surface exceeds a first predetermined settable threshold and the video stream generated by said second camera when the arm is adherent to the support surface or when said current height of the arm with respect to said support surface is lower than said second predetermined settable threshold greater than or equal to said first predetermined settable threshold.

6. Vehicle according to any of the previous claims 1 - 4, wherein the selection of the video stream between said first and second cameras is a function of the speed of the vehicle and preferably is a function of an activation condition of a service brake.

7. Vehicle according to any of the previous claims 1 - 4, wherein said processing unit is configured to simultaneously analyze each of the video streams generated by said first and second cameras and select the video stream in which the articulated arm appears less or in which the articulated arm appears more.

8. Vehicle according to any of the previous claims, further comprising at least one other camera (C3, C4) wherein said at least one other camera is positioned behind the vehicle to frame an area behind the vehicle and wherein said monitoring unit processing is configured to select the video stream of said other camera when the vehicle rolls back.

9. The vehicle according to claim 8, wherein said processing unit is configured to select the video stream of said other camera when the vehicle rolls back and the arm is raised.

10. Vehicle according to any of the previous claims 1 - 7, further comprising at least one further camera (C3, C4) wherein said at least one further camera is positioned behind the vehicle to frame an area behind the vehicle and in which said processing unit is configured to select the video stream of said first or second camera while the vehicle moves backwards with the articulated arm in the leveling configuration.

11. Vehicle according to any one of the previous claims, wherein the first camera is fixed to the vehicle in an approximately intermediate position between a pair of vehicular front wheels and/or wherein the second camera is fixed to a vehicular headlight (LG) or to a roof (R) of a vehicular cabin (CB).
